# EUROPÄISCHE PATENTSCHRIFT

(11) **EP 2 116 161 B1**
(45) Veröffentlichungstag und Bekanntmachung des Hinweises auf die Patenterteilung: **03.08.2011**
(21) Anmeldenummer: 08155653.2
(22) Anmeldetag: 05.05.2008
(51) Int. Cl.: A47J 42/40

(54) **Zerkleinerungsmaschine für Lebensmittelgut und Verfahren zum Betreiben einer solchen**
Grinding machine for food and method for using it
Appareil broyeur pour produits alimentaires et méthode de l'utiliser

(43) Veröffentlichungstag der Anmeldung: 11.11.2009
(73) Patentinhaber: Mahlkönig GmbH & Co. KG, 22047 Hamburg (DE)
(72) Erfinder: Hointza, Mario, 21732 Krummendeich (DE); Roock, Hans-Jürgen, 22761 Hamburg (DE)
(74) Vertreter: Raffay & Fleck

(56) Entgegenhaltungen:
- WO-A-2005/063091
- US-A1- 2003 129 286
- US-A1- 2005 015 348
- US-B1- 6 349 889

## Beschreibung

Die Erfindung betrifft eine Zerkleinerungsmaschine für Lebensmittelgut, insbesondere eine Kaffeemühle. Die Erfindung betrifft ferner ein System bestehend aus einer solchen Zerkleinerungsmaschine und einer ein zu zerkleinerndes Lebensmittelgut enthaltenen Chargenverpackung. Sie betrifft schließlich ein Verfahren zum Betreiben einer Zerkleinerungsmaschine für Lebensmittelgut, insbesondere eine Kaffeemühle.

Zerkleinerungsmaschinen für Lebensmittelgut sind weit verbreitet und hinlänglich bekannt. Hierzu zählen nicht nur Kaffeemühlen, für die die Erfindung derzeit von besonderem Interesse ist, sondern auch Gewürzmühlen, Zerkleinerungsmaschinen für grobe Salzkristalle, Zerkleinerungsmaschinen für Zucker und dgl.

Solche Zerkleinerungsmaschinen finden teilweise in privaten Haushalten Gebrauch, werden insbesondere aber auch gewerblich genutzt. So werden z.B. Kaffeemühlen in Verkaufsgeschäften für Kaffee betrieben, um dort beim Verkauf ganze Kaffeebohnen chargenweise, z.B. in typischen 500 g Verpackungen, frisch zu vermahlen. Ferner werden Kaffeemühlen eingesetzt in Gastronomiebetrieben, um Bohnenkaffee vor der Zubereitung eines Kaffee-Getränkes, z.B. eines Espressos oder dgl., portionsweise frisch zu vermahlen.

Grundsätzlich schaffen sich die solche Kaffeemühlen in gewerblichem Umfeld nutzenden Betriebe diese Mühlen zwar auch selbst an, allerdings finden hier zunehmend andere Modelle Anwendung, bei denen die Kaffeemühlen von Kaffeeanbietern bzw. Kaffeeröstern erworben und den gewerblichen Nutzern leihweise überlassen werden. Mit diesem Geschäftsmodell verbunden ist dann typischerweise ein längerfristiger Bezugsvertrag, mit dem sich der gewerbliche Nutzer der so zur Verfügung gestellten Mühle verpflichtet, das Rohprodukt "Kaffee" bei dem Anbieter zu beziehen, dem die Kaffeemühle gehört bzw. der diese für eine Nutzung zur Verfügung gestellt hat.

Auch wenn von den gewerblichen Nutzern solchermaßen zur Verfügung gestellter Kaffeemühlen diese Verträge überwiegend eingehalten werden, kommt es doch zu Missbrauch. Bei solchem Missbrauch wird z.B. das Rohprodukt Kaffee bei einem anderen Lieferanten bzw. Kaffeeröster bestellt als demjenigen, dem die Mühle gehört und dennoch vertragswidrig in dieser Mühle gemahlen. Dadurch entsteht dem Eigentümer der Mühle, dem ausleihenden Kaffeelieferanten bzw. Kaffeeröster ein wirtschaftlicher Schaden.

Entsprechende Modelle, bei denen es ebenfalls zum Missbrauch kommt, sind - sofern sie nicht bereits tatsächlich in Anwendung befindlich sind - jedenfalls in weiteren Bereichen der Anwendung von Zerkleinerungsmaschinen allgemein denkbar, die für gewerbliche Zwecke von den Lieferanten der zu zerkleinernden Lebensmittel zur Verfügung gestellt werden.

Entsprechend gibt es einen Bedarf einer Möglichkeit für den Eigentümer einer solchen Zerkleinerungsmaschine bzw. für denjenigen, der sie gegen wie oben aufgezeigte Auflagen dem Gewerbetreibenden zur Verfügung stellt, eine Einhaltung der vertraglichen Bezugsbindung sicherzustellen bzw. auszuschließen, dass mit der eigenen Zerkleinerungsmaschine Lebensmittelgut fremder Anbieter bearbeitet bzw. zerkleinert wird.

In der US 2005/0015348A1 ist in Bezug auf Zubereitungsautomaten für Getränke oder andere Lebensmittel beschrieben, dass mithilfe von auf mit Ausgangsprodukten für die Getränkezubereitung, wie etwa gemahlenem Kaffee, Getränkekonzentrat, Suppenkonzentrat oder dergleichen, ausgelieferten Datenträgern gespeicherten, die Anzahl der mit den Ausgangsprodukten durchführbaren Zubereitungszyklen repräsentierenden Daten der Zubereitungsautomat für die angegebene Anzahl von Zyklen freigeschaltet wird. Dies soll dazu dienen, den Anbietern solcher Ausgangsprodukte ein Geschäftsmodell zu ermöglichen, bei dem sie die Zubereitungsautomaten unentgeltlich oder aber für ein geringes Entgelt zur Verfügung stellen und ihren Gewinn aus dem Verkauf der Ausgangsprodukte an den Nutzer des Zubereitungsautomaten erzielen.

Mit der Erfindung soll eine Lösung der sich in Bezug auf Zerkleinerungsmaschinen stellenden, oben beschriebenen Aufgabe angegeben werden. Dabei soll zugleich eine Möglichkeit geschaffen werden, dem Anwender der Zerkleinerungsmaschine, auf der unterschiedliche zu zerkleinernde Produkte zur Anwendung kommen, eine Einstellung der Maschine entsprechend der jeweils gewählten Ausgangsprodukte zu erleichtern bzw. ungewollte Fehleinstellungen zu vermeiden.

Diese Lösung besteht insbesondere in einer Zerkleinerungsmaschine mit Merkmalen des Anspruches 1, ferner in einem System mit den Merkmalen des Anspruches 4 und auch in einem Verfahren zum Betreiben einer Zerkleinerungsmaschine mit den Merkmalen des Anspruches 6.

Vorteilhafte Weiterbildungen der Zerkleinerungsmaschine sind in den abhängigen Ansprüchen 2 bis 3, eine vorteilhafte Weiterbildung des Systems in Anspruch 5 und mögliche vorteilhafte Ausgestaltungen des Verfahrens in den abhängigen Ansprüchen 7 bis 10 angegeben.

Die grundsätzliche Idee der Erfindung besteht darin, eine Zerkleinerungsmaschine so einzurichten, dass sie für ein unberechtigtes Verarbeiten von Lebensmittelgut gesperrt ist, erst durch Übermittlung entsprechender Daten, die typischerweise zusammen mit einer Chargenverpackung eines zu zerkleinernden Lebensmittelgutes dem Anwender der Zerkleinerungsmaschine übergeben werden, frei geschaltet wird, dann auch nur für eine vorgegebene Nutzungsspanne.

Hierzu ist in der Zerkleinerungsmaschine selbst ein Datenempfänger angeordnet, der mit einer ebenfalls in der Zerkleinerungsmaschine befindlichen Steuerung kommuniziert bzw. mit der letztgenannten zur Auslesung der Daten verbunden ist, wobei die Steuerung abhängig von den empfangenen Daten die Zerkleinerungsmaschine für eine vorgegebene Nutzungsspanne freischaltet bzw. für ein solches Vorgehen eingerichtet ist.

In der Praxis wird also der Aufsteller der Zerkleinerungsmaschine, der zugleich auch exklusiver Lieferant des auf dieser Zerkleinerungsmaschine zu zerkleinernden Lebensmittelgutes ist, das von ihm chargenweise verpackt gelieferte Lebensmittelgut, genauer die entsprechende Verpackung einer Charge, mit einem Datenträger und einer Datenübertragungsvorrichtung ausrüsten, wobei die Datenübertragungsvorrichtung zur Kommunikation mit der Datenempfangseinheit an der

Zerkleinerungsmaschine eingerichtet ist. Die hierbei in dem Datenspeicher enthaltenen Daten können insbesondere Informationen über die Menge der Charge enthalten, aber auch solche über den Typ des Lebensmittelgutes (z.B. eine Kaffeesorte) und insbesondere auch eine Authentisierung hinsichtlich der Echtheit der Herkunft von dem Lieferanten.

Diese Daten werden dann an die Datenempfangseinrichtung der Zerkleinerungsmaschine übermittelt und der Steuerung zugeführt. Nach Auswertung dieser Daten und Bestätigung der Authentizität des Zulieferers bzw. des zugelieferten Produktes schaltet die Steuerung die Zerkleinerungsmaschine frei. Vermittels der Informationen über die Menge des in der Charge enthaltenen Lebensmittelgutes (z.B. nach Gewicht oder Volumen) kann die Steuerung die Zerkleinerungsmaschine für die Zerkleinerung einer entsprechenden Menge an Lebensmittelgut freischalten. Diese Zerkleinerung kann dabei abschnitts- bzw. portionsweise erfolgen oder in einem Durchlauf.

Erfindungsgemäß ist ferner vorgesehen, dass ausgehend von auf dem Datenspeicher enthaltenen Daten die Zerkleinerungsmaschine in wenigstens einem Betriebsparameter automatisch eingestellt wird, insbesondere gesteuert durch die Steuerung. So kann z.B. bei einer Kaffeemühle der Mahlgrad automatisch eingestellt werden, abhängig davon, ob das zugeführte Lebensmittelgut als Espressokaffee oder Filterkaffeebohnen in den zugehörigen Daten auf dem Datenspeicher der Chargenverpackung charakterisiert ist. Dabei kann entweder eine von dem Anwender nicht mehr zu beeinflussende Verstellung vorgesehen sein, wenn der Anbieter des Lebensmittelgutes hier eine bestimmte Einstellung vorschreibt, oder es kann eine "Grobeinstellung" in einem bestimmten Bereich erfolgen, die von dem Anwender jedoch noch einmal verändert oder sogar anders gewählt werden kann. Bei einer solchen Vorgehensweise wird zumindest verhindert, dass eine an das zu zerkleinernde Lebensmittelgut angepasste Einstellung eines entsprechenden Betriebsparameters, z.B. des Mahlgrades einer Kaffeemühle, schlicht vergessen und dadurch ein unzureichendes Zerkleinerungsergebnis erzielt wird.

Sofern in der Zerkleinerungsmaschine neben der Datenempfangseinrichtung auch noch eine Datensendeeinrichtung angeordnet ist, die ebenfalls mit der Datenübertragungsvorrichtung der Chargenverpackung kommunizieren kann, können Daten in den Speicher der Chargenverpackung übermittelt und dort eingeschrieben werden.

Besonders vorteilhaft ist, wenn die Datenempfangseinrichtung und/oder die Datensendeeinrichtung für eine drahtlose Übertragung ausgelegt sind, wobei sich hier besonders die RFID-Technik bewährt. Die RFID-Technik erlaubt es insbesondere, die Datenspeicher an den Chargenverpackungen als Transponder oder RFID-Tags auszubilden, die keine eigene Energieversorgung benötigen, sondern ihre Energie aus der Sendeleistung der Datensendeeinrichtung beziehen.

Grundsätzlich sind bei der Vorgehensweise nach dem erfindungsgemäßen Verfahren zum Betreiben einer Zerkleinerungsmaschine für Lebensmittelgut verschiedene Möglichkeiten denkbar.

In einer einfachsten Möglichkeit wird der der Chargenverpackung zugeordnete Datenspeicher nach einem Auslesen gelöscht oder auf sonstiger Weise unbrauchbar gemacht, z.B. durch Zerstörung der Datenübertragungsvorrichtung, um so eine erneute Verwendung zur Freischaltung der Zerkleinerungsmaschine zu verhindern.

Diese Art der Ausgestaltung wird insbesondere im Zusammenhang mit einfachen Umverpackungen zur Anwendung gelangen, die nach einer vollständigen Entleerung entsorgt werden.

Alternativ kann das zu zerkleinernde Lebensmittelgut aber auch in Vorratsbehältern angeliefert werden, die direkt auf die Zerkleinerungsmaschine aufgesetzt und mit dieser verbunden werden können. Um hier z.B. einen zwischenzeitlichen Austausch eines Vorratsbehälters vor einer vollständigen Leerung zu ermöglichen, kann vorgesehen sein, dass von der Zerkleinerungsmaschine von der Steuerung ermittelte Daten über einen Durchsatz, z.B. die Menge einer in einem Zerkleinerungsvorgang zerkleinerten Portion des Lebensmittelgutes über die Datensendeeinrichtung an die Datenübertragungsvorrichtung zurückgesendet und in den Datenspeicher der Chargenverpackung eingeschrieben werden. Auf diese Weise kann nachgehalten werden, für welche Menge des in einer solchen Chargenverpackung befindlichen Lebensmittelgutes eine Zerkleinerung mit der Zerkleinerungsmaschine noch gestattet ist. Erst wenn die Menge insgesamt auf Null geschrieben ist, wird die Zerkleinerungsmaschine gesperrt.

Je nach Genauigkeit der Mengenbestimmung beim Zerkleinern in der Zerkleinerungsmaschine sollte zweckmäßigerweise eine gewisse Toleranzspanne vorgesehen sein, um zu verhindern, dass die Zerkleinerungsmaschine vor der Zerkleinerung des vollständigen Inhaltes der Chargenverpackung gesperrt wird.

Schließlich ist es von Vorteil, wenn für die Durchführung von Wartungsarbeiten eine Freischaltung der Zerkleinerungsmaschine möglich ist. Dies kann z.B. automatisch gesteuert durch die Steuerung erfolgen, wenn diese die Wartungsintervalle automatisch nachhält. So kann z.B. bei einer Kaffeemühle die Durchführung eines Reinigungsschrittes zur Reinigung des Mahlwerkes nach einer vorbestimmten Anzahl von Mahlvorgängen vorgeschrieben sein. So kann die Steuerung dann in einen Reinigungsmodus schalten, durch entsprechende Ausgabe von optischen Signalen, z.B. auf einem Display und/oder akustischen Signalen die Durchführung dieses Reinigungsschrittes verlangen und die Zerkleinerungsmaschine für diesen Schritt freigeben.

Alternativ ist es auch möglich, gesonderte Datenträger mit Datenübermittlungsvorrichtung vorzusehen, die von Servicepersonal mitgeführt werden und mit denen für die Durchführung von Wartungsarbeiten die Zerkleinerungsmaschinen freigeschaltet werden können, z.B. für eine benötigte Anzahl von Zerkleinerungsvorgängen. Auch ist es hier möglich, ein bestimmtes Wartungs- oder Reinigungsmaterial in ähnlicher Art und Weise wie das zu zerkleinernde Lebensmittelgut auf einer Chargenverpackung mit einem Datenträger und einer Datenübermittlungsvorrichtung zu versehen, wobei der Datenträger Daten zur Freischaltung der Zerkleinerungsmaschine enthält. Hierdurch kann der Hersteller oder der Aufsteller der Zerkleinerungsmaschine die Verwendung bestimmter, für die Wartung der Zerkleinerungsmaschine geeigneter Wartungs- oder Reinigungsmittel vorschreiben und diese Verwendung überwachen.

Weitere Merkmale und Vorteile der Erfindung ergeben sich aus der nachfolgen Beschreibung eines Ausführungsbeispiels anhand der beigefügten Figuren. Dabei zeigen:
- Fig. 1: in einer schematischen dreidimensionalen Ansicht ei- ne Kaffeemühle als eine mögliche Ausgestaltungsform einer erfindungsgemäßen Zerkleinerungsmaschine für Lebensmittelgut;
- Fig. 2: in einer perspektivischen Prinzipdarstellung einen Einwegtrichter zum Aufsetzen auf die Kaffeemühle ge- mäß Fig. 1; und
- Fig. 3: eine übliche Kaffeeverpackung mit einem in erfin- dungsgemäßer Weise daran festgelegten RFID-Tag zur Verwendung mit der erfindungsgemäßen Kaffeemühle bzw. nach einem erfindungsgemäßen Verfahren und zur Bildung eines erfindungsgemäßen Systems bestehend aus einer Kaffeemühle und einer solchen Verpackung.

In den Figuren sind schematisch und in nicht zwingend maßstabsgerechter und teilweise stark vereinfachter Darstellung Abbildung wiedergegeben, die ein mögliches Ausführungsbeispiel der Erfindung anhand einer Kaffeemühle und entsprechenden Chargenverpackungen für Kaffee zeigen.

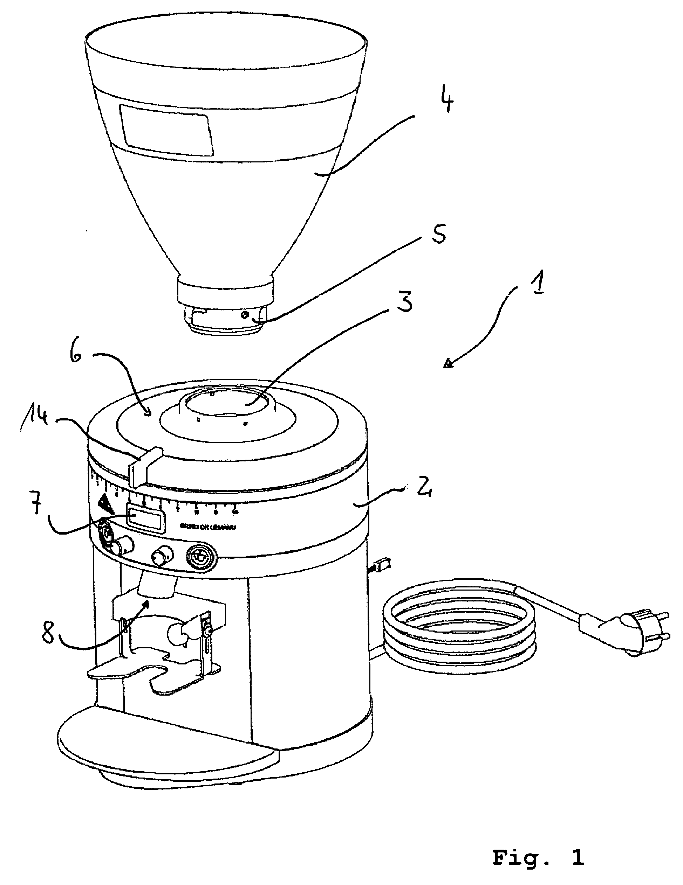

In Fig. 1 ist zunächst eine Kaffeemühle 1 gezeigt, die allgemein ein Gehäuse 2 aufweist, welches das eigentliche Mahlwerk sowie die elektrische Versorgung und eine Steuerung umschließt. Auf der Oberseite des Gehäuses 2 befindet sich ein dort etwa mittig angeordneter Einlassanschluss 3 mit einer durchgehenden Öffnung bis in das Mahlwerk. Auf die Kaffeemühle 1 aufsetzbar und mit einem Bajonettring 5 mit dem Einlassanschluss 3, bzw. mit dort angeordneten Verbindungsmitteln, verbindbar ist ein Vorratstrichter 4. Dieser kann mit ganzen Kaffeebohnen befüllt werden, die aufgrund der Schwerkraft kontinuierlich in den Einlassanschluss 3 nachrutschen sobald von dort Kaffeebohnen in dem Mahlwerk vermahlen werden und der so gemahlene Kaffee über den Auslass 8 ausgegeben wird.

Die Kaffeemühle 1 verfügt weiterhin über eine Anzeigeeinrichtung, ein Display 7.

In einem Bereich 6 auf der Oberseite des Gehäuses 2 ist unterhalb der Gehäusewand eine Antenne einer Datenempfangseinrichtung angeordnet, die vorliegend nach der RFID-Technologie arbeitet z.B. mit einer Frequenz von 13,56 MHz. Diese Antenne bzw. die Datenempfangsreinrichtung ist an eine ebenfalls in dem Gehäuse 2 angeordnete Steuerung angeschlossen, die die Arbeitsvorgänge der Kaffeemühle 1 steuert.

Diese Kaffeemühle 1 ist insbesondere vorgesehen für ein portionsweises Mahlen von Kaffeebohnen für die frische Zubereitung von Kaffeegetränken wie Espresso oder dgl. im Gastronomieeinsatz. Hierfür kann z.B. ein Siebträger einer Espressomaschine unterhalb des Auslasses 8 positioniert werden und je nach gewünschter Kaffeemenge z.B. mit frisch gemahlenen Kaffee für eine einfache Portion Espresso oder eine doppelte Portion Espresso gefüllt werden. Die ausgegebene Menge des gemahlenen Kaffees wird entsprechend von der Steuerung bestimmt über eine Regelung der Laufzeit des Mahlwerkes. Außerdem ist an der Kaffeemühle 1 eine Möglichkeit zur Verstellung des Mahlgrades vorgesehen, die über den Mahlgradverstellhebel 14 betätigt wird.

Das Besondere an der in Fig. 1 dargestellten Kaffeemühle 1 besteht in der Datenempfangseinrichtung mit der Antenne im Bereich 6 und der für eine Verarbeitung der über diese Datenempfangseinrichtung empfangene Daten eingerichteten Steuerung.

Diese Steuerung ist nämlich derart eingerichtet, dass sie die Kaffeemühle 1 nur dann zum Mahlen freigibt, wenn zuvor Daten von einem Datenträger auf einer Chargenverpackung einer Charge Kaffeebohnen eingelesen und verifiziert worden sind.

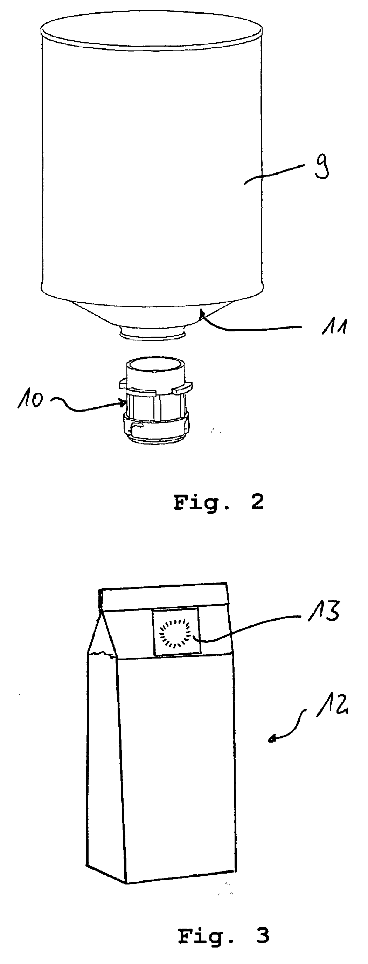

Eine solche Verpackung kann z.B. die in Fig. 3 gezeigte einfache und handelsübliche Kaffeeverpackung 12 in Form einer Papier- oder Kunststofftütenverpackung sein, an der in erfindungsgemäßer Weise ein Datenspeicher zusammen mit einer Datenübertragungsvorrichtung gebündelt in einem RFID-Tag 13 angeordnet sind. Der RFID-Tag 13, der hinsichtlich seiner Datenübermittlung auf dieselbe Frequenz abgestimmt ist wie die Datenempfangseinrichtung in der Kaffeemühle 1, z.B. auf 13,56 MHz, enthält typischerweise Daten über den Hersteller, Röster bzw. Lieferanten des Kaffees und über die Füllmenge in der Kaffeeverpackung 12, z.B. 500 g. Er kann auch Daten über die Kaffeesorte sowie weitere relevante Daten enthalten.

Wird dieser RFID-Tag 13 an der Kaffeeverpackung 12 in den Bereich 6 des Gehäuses 2 der Kaffeemühle 1 so gehalten, dass die Datenempfangseinrichtung in der Kaffeemühle 1 Daten aus dem RFID-Tag 13 auslesen kann, überprüft die Steuerung der Kaffeemühle 1 diese Daten zunächst auf Übereinstimmung mit einem Produkt eines autorisierten Herstellers. Kann diese Prüfung positiv abgeschlossen werden, gibt die Steuerung die Kaffeemühle 1 für den Mahlvorgang frei, zugleich wird mit einem von einer ebenfalls über die Antenne in dem Bereich 6 kommunizierenden Datensendeeinrichtung der RFID-Tag 13 deaktiviert, um eine erneute Verwendung desselben auszuschließen. Die Steuerung, die beim Auslesen der Daten aus dem RFID-Tag 13 zugleich Informationen über die Menge des in der Kaffeeverpackung 12 enthaltenden Produktes erhalten hat, bestimmt nun eine zum Vermahlen dieser Menge üblicherweise benötigte Anzahl von einzelnen Mahlvorgängen, nach deren Ablauf die Kaffeemühle 1 wieder gesperrt wird. Dabei wird selbstverständlich die unterschiedliche Ausgabe in unterschiedlichen Mahlprogrammen (Menge für einfachen Espresso, doppelten Espresso und dgl.) berücksichtigt. Der entweder vor oder auch nach dem Auslesen des RFID-Tags 13 in den Vorratstrichter 4 eingefüllte Kaffee kann so vollständig vermahlen werden, nach Durchsatz dieser Menge stoppt die Kaffeemühle 1 jedoch und die Steuerung gibt einen erneuten Mahlvorgang erst nach Einlesen eines weiteren, authentisierte Originaldaten enthaltenden RFID-Tags frei. Dieser Ablauf kann mit entsprechenden Symbolen und Informationen in dem Display 7 angezeigt und erläutert werden, z.B. durch Angabe der freigegebenen Produktmenge oder der Anzahl der damit verbundenen erlaubten Mahlvorgänge.

In Fig. 2 ist eine alternative Möglichkeit für eine Chargenverpackung von Kaffee in Form eines Einwegtrichters 9 dargestellt. Dieser wird mittels eines Adapters 10 für einen Anschluss an den Einlassanschluss 3 der Kaffeemühle 1 vorbereitet, wobei der Adapter 10 üblicherweise erst nach Entfernen einer Originalversiegelung über der Öffnung des Einwegtrichters 9 aufgesetzt werden kann.

Der Einwegtrichter 9 trägt in einem im Betrieb dem Bereich 6 an dem Gehäuse 2 der Kaffeemaschine 1 gegenüberliegenden Bereich 11 einen RFID-Tag (hier nicht gezeigt), der in ähnlicher Art und Weise wie zuvor anhand des RFID-Tags 13 an der Kaffeeverpackung 12 beschrieben Daten über Füllmenge und Hersteller bzw. Röster oder Lieferant der Ware sowie ggf. weitere Daten trägt.

Wird der Einwegtrichter nun vermittels des Adapters 10 auf die Kaffeemühle 1 aufgesetzt, werden über die in der Kaffeemühle 1 angeordnete Datenempfangseinrichtung mit der in dem Bereich 6 angeordneten Antenne die Daten des in dem Bereich 11 angeordneten RFID-Tags ausgelesen und der Steuerung der Kaffeemühle 1 zugeführt.

Grundsätzlich kann auch hier als "Quittung" ein Deaktivieren des RFID-Tags im Bereich 11 erfolgen, so dass der Einwegtrichter 9 nach vollständigem Entleeren entnommen werden kann, wenn die Kaffeemühle nach Ablauf der von der Steuerung errechneten Malvorgänge den Betrieb einstellt, die Steuerung diese Kaffeemühle sperrt.

Alternativ ist es aber auch möglich, dass mittels der in der Kaffeemühle 1 enthaltenen Datensendeeinrichtung Daten über den mengenmäßigen Verbrauch von Kaffee zurückgeschrieben werden auf den Speicher des RFID-Tags im Bereich 11, so dass hier fortwährend akutalisierte Werte über die rechnerische Restmenge in dem Einwegtrichter 9 enthalten sind. Dies hat insbesondere den Vorteil, dass z.B. bei Verwendung verschiedener Kaffeesorten in einer Kaffeemühle mehrere Einwegtrichter 9 mit unterschiedlichen Kaffeeprodukten gleichzeitig durch Auswechseln mit der Kaffeemühle 1 verwendet werden können. Über die in den RFID-Tags in den Bereichen 11 solcher Trichter enthaltenen, fortwährend aktualisierten Daten, kann die Steuerung die Mühle immer wieder für die in dem Einwegtrichter 9 noch enthaltene Restmenge zu vermahlenden Kaffees freigeben, ohne dass mehr Kaffee vermahlen werden kann.

Bei dem Einwegtrichter 9 kann der RFID-Tag anstelle in dem Bereich 11 auch im Bereich einer Originalitätsversiegelung über der Öffnung des Einwegtrichters, in die der Adapter 10 eingeführt wird, enthalten sein. Diese Variante sollte jedoch nur dann gewählt werden, wenn auch bei dem Einwegtrichter 9 der RFID-Tag ähnlich wie jener bei der Kaffeeverpackung 12 nach einmaligen Auslesen deaktiviert wird. Ansonsten könnte der RFID-Tag versehentlich mit dem Originalitätssiegel zusammen entsorgt werden und so für ein weiteres Schreiben im Rahmen des oben geschilderten Verfahrens nicht mehr zur Verfügung stehen.

Mit der erfindungsgemäßen Kaffeemühle kann ein Anbieter von Kaffee, der seinem Abnehmer eine Kaffeemühle 1 aus seinem Besitz zur Verfügung stellt zum Vermahlen seines Produktes sicherstellen, dass diese Kaffeemühle 1 nicht in unzulässiger Weise für das Vermahlen von Fremdprodukten eingesetzt wird.

Eine weitere Nutzungsmöglichkeit des erfindungsgemäßen Systems besteht neben der geschilderten Sperrung bzw. gezielten Freigabe der Kaffeemühle darin, auf dem Datenspeicher an der Chargenverpackung, also auf dem RFID-Tag 13 der Kaffeeverpackung 12 oder dem entsprechenden RFID-Tag in dem Bereich 11 des Einwegtrichters 9 gespeicherte Daten über die Art des Produktes für eine automatische Voreinstellung der Kaffeemühle 1, insbesondere hinsichtlich des Mahlgrades, zu nutzen. Dies kann entweder so geschehen, dass eine manuelle Änderung des Mahlgrades nicht mehr möglich ist, insbesondere dann, wenn der Hersteller des Kaffees einen konkreten Mahlgrad für die Vermahlung seines Produktes vorschreibt. Es kann aber auch lediglich eine Voreinstellung in einen empfohlenen Bereich erfolgen, um abzusichern, dass eine entsprechende Umstellung des Mahlgerades bei einem Produktwechsel nicht versehentlich vergessen wird.

Schließlich ist zu erwähnen, dass (in den Figuren nicht dargestellt) bei der Kaffeemühle gemäß dem Ausführungsbeispiel ein Wartungsmodus vorgesehen ist, in dem die Kaffeemühle zum Betrieb aktiviert werden kann, um z.B. Reinigungsarbeiten des Mahlwerkes durch Vermahlen von Reinigungsgranulat oder dgl. durchzuführen. Dieser Reinigungsmodus kann entweder aufgerufen werden durch ein einfaches Auslesen eines entsprechenden Chips (RFID) oder aber gesteuert von der Kaffeemühle selbst automatisch eingestellt werden verbunden mit der Aufforderung eine Reinigung oder andere Wartung durchzuführen und dem Wechsel in ein entsprechendes Reinigungs- bzw. Wartungsprogramm.

Auch wenn die Erfindung vorstehend anhand eines Ausführungsbeispieles in Form einer Kaffeemühle 1 beschrieben worden ist, so wird sicherlich deutlich und ist zu betonen, dass die Erfindung in gleicher Weise eingesetzt werden kann in anderen Maschinen zur Zerkleinerung von Lebensmittelgut, z.B. Gewürzmühlen, Salzzerkleinern, Zuckerbrechern und dgl. Die Erfindung in ihrer vollständigen Tragweite ist in den nachfolgenden Ansprüchen entsprechend auch nicht auf eine Kaffeemühle beschränkt, sondern bezieht sich allgemein auf Zerkleinerungsmaschinen für Lebensmittelgut, ein System bestehend aus einer solche Zerkleinerungsmaschine und einer Chargenverpackung eines Lebensmittelgutes sowie auf ein Verfahren zum Betreiben einer Zerkleinerungsmaschine.

### Bezugszeichenliste

- 1: Kaffeemühle
- 2: Gehäuse
- 3: Einlassanschluss
- 4: Vorratstrichter
- 5: Bajonettring
- 6: Bereich
- 7: Display
- 8: Auslass
- 9: Einwegtrichter
- 10: Adapter
- 11: Bereich
- 12: Kaffeeverpackung
- 13: RFID-Tag
- 14: Mahlgradverstellhebel

## Patentansprüche

1. Zerkleinerungsmaschine für Lebensmittelgut, insbesondere Kaffeemühle, mit einer Steuerung und einer mit der Steuerung verbundenen Datenempfangseinrichtung, wobei die Datenempfangseinrichtung dazu eingerichtet ist, auf einem mit einer korrespondierenden Datenübertragungsvorrichtung versehenen und an einer Chargenverpackung (9, 12) eines zu zerkleinernden Lebensmittelguts angeordneten bzw. einer solchen zugeordneten Datenspeicher gespeicherte Daten zu empfangen, wobei die Steuerung dazu eingerichtet ist, abhängig von den empfangenen Daten die Zerkleinerungsmaschine (1) für ein Zerkleinern von Lebensmittelgut für eine vorgegebene Nutzungsspanne freizuschalten, **dadurch gekennzeichnet, daß** die Steuerung ferner dazu eingerichtet ist, Betriebsparameter der Zerkleinerungsmaschine abhängig von den empfangenen, auf dem Speicher der Chargenverpackung (9, 12) enthaltenen Daten einzustellen.

2. Zerkleinerungsmaschine nach Anspruch 1, **dadurch gekennzeichnet, dass** sie ferner eine Datensendeeinrichtung aufweist zum Senden von Daten an die Datenübertragungsvorrichtung der Chargenverpackung (9, 12).

3. Zerkleinerungsmaschine nach einem der Ansprüche 1 oder 2, **dadurch gekennzeichnet, dass** die Datenempfangseinrichtung und/oder die Datensendeeinrichtung für eine drahtlose Übertragung ausgelegt sind, insbesondere basierend auf RFID-Technik.

4. System bestehend aus einer Zerkleinerungsmaschine (1) nach einem der vorhergehenden Ansprüche und einer ein zu zerkleinerndes Lebensmittelgut enthaltenden Chargenverpackung (9, 12) mit einem dieser zugeordneten Datenspeicher und einer an diesen angeschlossenen Datenübertragungsvorrichtung.

5. System nach Anspruch 4, **dadurch gekennzeichnet, dass** der Datenspeicher mit der Datenübertragungsvorrichtung in einem Transponder-Chip bzw. RFID-Tag (13) angeordnet sind.

6. Verfahren zum Betreiben einer Zerkleinerungsmaschine für Lebensmittelgut, insbesondere einer Kaffeemühle, wobei der Zerkleinerungsmaschine ein zu zerkleinerndes Lebensmittelgut chargenweise zugegeben wird, wobei vor, während oder nach dem Befüllen der Zerkleinerungsmaschine mit einer Charge des zu zerkleinernden Lebensmittelgutes ein einem Verpackungs- oder Transportbehältnis für die Charge des zu zerkleinernden Lebensmittelgutes zugeordneter Datenspeicher von einer in der Zerkleinerungsmaschine angeordneten Datenempfangseinheit ausgelesen und einer Steuerung für die Zerkleinerungsmaschine zugeleitet werden und die Steuerung die Zerkleinerungsmaschine für ein kontinuierliches oder sukzessives Zerkleinern der Charge des Lebensmittelgutes freischaltet, **dadurch gekennzeichnet, daß** wenigstens ein Betriebsparameter der Zerkleinerungsmaschine anhand der von der Datenempfangseinrichtung empfangenen Daten eingestellt wird.

7. Verfahren nach Anspruch 6, **dadurch gekennzeichnet, dass** die Daten auf dem Datenspeicher Informationen über die Füllmenge der Charge des zu zerkleinernden Lebensmittelgutes enthalten und dass die Steuerung die Zerkleinerungsmaschine für die Zerkleinerung einer der Füllmenge entsprechenden, diese gegebenenfalls um eine Toleranzmenge übersteigende Menge des Lebensmittelgutes freischaltet und nach Durchsatz dieser Menge die Zerkleinerungsmaschine sperrt.

8. Verfahren nach einem der Ansprüche 6 oder 7, **dadurch gekennzeichnet, dass** für die Durchführung von Wartungsabläufen die Zerkleinerungsmaschine gesondert freigeschaltet wird, insbesondere durch Einlesen entsprechender Wartungsdaten über die Datenempfangseinrichtung.

9. Verfahren nach einem der Ansprüche 6 bis 8, **dadurch gekennzeichnet, dass** der Datenspeicher nach dem Auslesen von der Zerkleinerungsmaschine für ein weiteres Auslesen unbrauchbar gemacht wird.

10. Verfahren nach einem der Ansprüche 6 bis 8, **dadurch gekennzeichnet, dass** nach einem Zerkleinerungsvorgang die Daten über die Menge des zuletzt zerkleinerten Lebensmittelgutes von der Steuerung vermittels einer in der Zerkleinerungsmaschine angeordneten Datensendeeinrichtung an die Datenübertragungsvorrichtung übertragen und in den Datenspeicher eingeschrieben werden.

## Claims

1. A foodstuff shredder, in particular a coffee grinder, fitted with a control unit and a data receiving device connected to the control unit, whereas the data receiving device is provided on a corresponding data transmission device and on a batch package (9, 12) of foodstuff to be shredded, said device being configured to receive data stored in an associated data memory, whereas the control unit is arranged to activate the shredder (1) for shredding of foodstuff for a preset usage time span depending on the received data, **characterised in** the control unit is further arranged to adjust the operating parameters of the shredder depending on the data received, contained in the memory of the batch package (9, 12).

2. A shredder according to claim 1, **characterised in that** it further exhibits a data sending device for sending data to the data transmission device of the batch package (9, 12).

3. A shredder according to one of the claims 1 or 2, **characterised in that** the data receiving device and/or the data are configured for wireless transmission, in particular based on RFID technique.

4. A system comprising a shredder (1) of one the preceding claims and a batch package (9, 12) containing foodstuff to be shredded, fitted with a data memory associated to said package and a data transmission device connected to said memory.

5. A system according to claim 4, **characterised in that** the data memory fitted with the data transmission device is arranged in a transponder chip respectively an RFID tag (13).

6. A method for operating a foodstuff shredder, in particular a coffee grinder, whereas foodstuff to be shredded is fed in batches into the shredder, whereas before, during or after filling the shredder with a batch of the foodstuff to be shredded, a data memory associated with a package or transport container intended for the batch of the foodstuff to be shredded is read by a data receiving unit arranged in the shredder and the data are conveyed to a control unit intended for the shredder and the control unit activates the shredder for continuous or successive shredding of the batch of the foodstuff, **characterised in that** at least one operating parameter of the shredder is adjusted using the data received from the data receiving device.

7. The process according to Claim 6, **characterised in that** the data contained in the data memory contain information about the filling quantity of the batch of the foodstuff to be shredded and that the control unit activates the shredder for shredding a corresponding filling quantity, possibly exceeding said value by a tolerance quantity and blocks the shredder after yielding said quantity.

8. A method according to any of the claims 6 to 7, **characterised in that** the shredder is activated separately for carrying out maintenance operations, in particular by inputting corresponding maintenance data via the data receiving device.

9. A method according to one of the claims 6 to 8, **characterised in that** the data memory after being read by the shredder is made unusable for any further reading.

10. A method according to one of the claims 6 to 8, **characterised in that** after a shredding cycle the data about the quantity of the last shredded foodstuff are transmitted to the data transmission device by the control unit by means of a data sending device arranged in the shredder and are registered into the data memory

## Revendications

1. Broyeuse pour aliment, en particulier moulin à café, équipée d'une commande et d'un dispositif de réception de données relié à la commande, le dispositif de réception de données étant installé sur un dispositif de transmission de données correspondant et sur un emballage de lots (9, 12) d'un aliment à broyer, et conçu pour recevoir des données rangées dans une mémoire de données associée, la commande étant conçue, en fonction des données reçues, pour actionner la broyeuse (1) afin de broyer un aliment pendant un laps de temps d'utilisation prédéterminé, **caractérisée en ce que** la commande est en outre conçue pour régler les paramètres d'exploitation de la broyeuse en fonction des données reçue et rangées dans la mémoire de l'emballage de lots (9, 12).

2. Broyeuse selon la revendication 1, **caractérisée en ce qu'**elle présente de plus un dispositif d'envoi de données pour l'envoi de données au dispositif de transmission de données de l'emballage de lots (9, 12).

3. Broyeuse selon l'une quelconque des revendications 1 ou 2, **caractérisée en ce que** le dispositif de réception de données et/ou le dispositif d'envoi de données sont conçus pour une transmission sans fil, en particulier reposant sur la technique RFID.

4. Système composée d'une broyeuse (1) selon l'une quelconque des revendications précédentes et d'un emballage de lots (9, 12) contenant un aliment à broyer, à l'aide d'une mémoire de données associée audit emballage et d'un dispositif de transmission de données connecté à ladite mémoire.

5. Système selon la revendication 4, **caractérisée en ce que** la mémoire de données pourvue du dispositif de transmission de données est installée dans une puce de répéteur ou une étiquette RFID (13).

6. Procédé d'utilisation d'une broyeuse pour aliment, en particulier un moulin à café, l'un aliment à broyer étant chargé dans la broyeuse par lots, système dans lequel avant, pendant ou après le remplissage de la broyeuse avec un lot de l'aliment à broyer une mémoire de données associée à un contenant d'emballage ou un contenant de transport pour le lot de l'aliment à broyer est lue par un dispositif de réception de données situé dans la broyeuse et lesquelles données sont acheminées à une commande prévue pour la broyeuse, ensuite la commande actionne la broyeuse pour lancer un broyage continu ou successif du lot de aliment, **caractérisée en ce qu'**au moins un paramètre d'exploitation de la broyeuse est réglé à l'aide des données reçues par le dispositif de réception de données.

7. Procédé selon la revendication 6, **caractérisé en ce que** les données rangées dans la mémoire de données contiennent des informations sur la quantité de remplissage du lot de l'aliment à broyer et que la commande actionne la broyeuse pour le broyage d'une quantité de l'aliment correspondante à la quantité de remplissage, dépassant celle-ci le cas échéant d'une quantité de tolérance et bloque la broyeuse après avoir broyé ladite quantité.

8. Procédé selon l'une des revendications 6 ou 7, **caractérisé en ce que** l'on on actionne séparément la broyeuse pour exécuter des opérations de maintenance, en particulier en lisant les données de maintenance correspondantes par le biais du dispositif de réception de données.

9. Procédé selon l'une quelconque des revendications 6 à 8, **caractérisé en ce que** la mémoire de données, après lecture effectuée par la broyeuse, est rendue inutilisable pour toute autre lecture.

10. Procédé selon l'une quelconque des revendications 6 à 8, **caractérisé en ce qu'**après un cycle de broyage, les données concernant la quantité de l'aliment broyé en dernier sont transmises au dispositif de transmission de données par la commande par le biais d'un dispositif d'envoi de données situé dans la broyeuse et sont lues dans la mémoire de données.
